# FASCICULE DE BREVET EUROPEEN

(11) **EP 4 279 191 B1**
(45) Date de publication et mention de la délivrance du brevet: **29.07.2026**
(21) Numéro de dépôt: 23173409.6
(22) Date de dépôt: 15.05.2023
(51) Int. Cl.: B09B 3/80, C23F 1/46

(54) **PROCEDE DE RECUPERATION DE L'INDIUM A PARTIR D'UN SUBSTRAT COMPRENANT DE L'OXYDE D'INDIUM-ETAIN ET UNE COUCHE METALLIQUE**
VERFAHREN ZUR RÜCKGEWINNUNG VON INDIUM AUS EINEM SUBSTRAT MIT INDIUMZINNOXID UND EINER METALLSCHICHT
METHOD FOR RECOVERING INDIUM FROM A SUBSTRATE COMPRISING INDIUM TIN OXIDE AND A METAL LAYER

(30) Priorité: 20.05.2022 FR 2204857
(43) Date de publication de la demande: 22.11.2023
(73) Titulaire: Commissariat à l'Energie Atomique et aux Energies Alternatives, 75015 Paris (FR)
(72) Inventeur: BILLY, Emmanuel, 38054 Grenoble Cedex 9 (FR); DUWALD, Romain, 38054 Grenoble Cedex 9 (FR); VAULOUP, Joshua, 38054 Grenoble Cedex 9 (FR)
(74) Mandataire: Santarelli

(56) Documents cités:
- JP-A- 2008 208 396
- ZHANG ZHEN ET AL: "Optimization of indium recovery from waste crystalline silicon heterojunction solar cells by acid leaching", SOLAR ENERGY MATERIALS AND SOLAR CELLS, ELSEVIER SCIENCE PUBLISHERS, AMSTERDAM, NL, vol. 230, 8 June 2021 (2021-06-08), XP086766465, ISSN: 0927-0248, [retrieved on 20210608], DOI: 10.1016/J.SOLMAT.2021.111218

## Description

### DOMAINE TECHNIQUE

La présente invention se rapporte au domaine général du recyclage des panneaux photovoltaïque.

L'invention concerne plus particulièrement un procédé de récupération d'un oxyde transparent conducteur à partir d'un substrat comprenant un oxyde transparent conducteur recouvert localement par un métal.

L'invention concerne également un procédé de recyclage d'un panneau photovoltaïque, contenant des cellules photovoltaïques, par exemple en silicium.

L'invention est particulièrement intéressante puisqu'elle permet de récupérer sélectivement l'indium présent dans les cellules photovoltaïques.

### ÉTAT DE LA TECHNIQUE ANTÉRIEURE

Le recyclage des panneaux photovoltaïques (PV) est devenu un enjeu majeur depuis le 13 août 2012 puisque, à cette date, la Directive relative aux Déchets d'Equipements Electriques et Electroniques (DEEE) a été étendue aux panneaux photovoltaïques (PV).

Les panneaux photovoltaïques comprennent généralement plusieurs cellules photovoltaïques enrobées dans un polymère, le tout étant disposé entre deux plaques, par exemple en verre. Les cellules photovoltaïques existantes peuvent, par exemple, être en silicium. A titre illustratif et non limitatif, une cellule en silicium à hétérojonction (HJT) peut comprendre un substrat en silicium monocristallin recouvert, de part et d'autre, par des couches de silicium amorphe (P et N+). Ces couches sont elles-mêmes recouvertes du film d'oxyde transparent conducteur (OTC) puis par une grille conductrice.

Ainsi, un module photovoltaïque avec des cellules photovoltaïques en silicium est donc majoritairement composé de verre (74% du poids total), d'aluminium (10%), de polymère (environ 6,5%) et de silicium (environ 3%). Les métaux (zinc, plomb, cuivre et argent) ne représentent qu'une part négligeable de la masse totale du panneau photovoltaïque.

Les objectifs minimaux de valorisation et de recyclage sont donc photovoltaïques aisément atteints par la seule récupération du verre et du cadre en aluminium.

Les procédés actuels se concentrent sur le démantèlement des modules par voie chimique ou thermique puis sur le recyclage des différents éléments grâce à des voies de retraitement spécialisées.

L'argent représente le métal constituant la plus forte valeur ajoutée (près de 90% de la valeur de la cellule). C'est pourquoi, la récupération de l'argent représente un enjeu majeur pour pérenniser la filière de recyclage.

Il est également intéressant de récupérer les plaques de silicium et les métaux des couches d'oxyde transparents conducteurs.

Pour cela, classiquement, les cellules photovoltaïques des modules photovoltaïques sont traitées chimiquement par dissolution totale des éléments métalliques (Cu, Ag, Sn, Pb, Al,..), des anti-réfléchissants et de la couche n-dopée pour récupérer le silicium. La dissolution peut être réalisée dans des bains de traitement composés de divers acides (par exemple, HF, HNO₃, H₂SO₄) concentrés seuls ou en mélange et souvent portés à ébullition.

Par exemple, dans le document CN 102 343 352 A décrit un procédé en plusieurs étapes permettant de récupérer des tranches de silicium sans endommager la couche antireflet ou la jonction PN. Le procédé se découpe en plusieurs étapes. D'abord, des solvants organiques tels que l'éthanol, l'acétone ou l'alcool isopropylique sont utilisés pour dissoudre la partie organique de la métallisation et ainsi la séparer de la tranche en silicium. Cette étape peut être mise en œuvre sous ultra-sons. Ensuite, de l'acide nitrique (concentration de 50 à 65 % massique) ou de l'acide sulfurique (concentration de 70 à 98 % massique) est utilisé pour enlever les résidus métalliques et de verre restants. Puis de l'acide chlorhydrique est utilisé pour enlever les ions métalliques. Enfin, un dernier nettoyage à l'acide fluorhydrique permet d'éliminer l'oxyde de silicium restant. Entre chaque étape, les cellules sont rincées à l'eau. Ainsi, la tranche de silicium peut être recyclée.

Le document US 2011/0083972 A1 décrit un procédé électrolytique pour le recyclage des éléments actifs, spécifiquement visant à retirer le revêtement d'oxyde conducteur transparent, par exemple en oxyde d'indium étain (ou ITO pour 'indium tin oxide'). Le substrat est immergé dans un bain acide (acide chlorhydrique ou acide sulfurique) ou basique (hydroxyde de sodium ou hydroxyde de potassium). Il est connecté à source de puissance DC, sur lequel est appliquée une tension pour qu'il agisse comme une cathode (électrode négative). Le potentiel cathodique génère des protons qui entraînent la dissolution de la couche. Le système est fermé avec une anode immergée dans la solution qui est reliée à la source de puissance. Ce procédé électrolytique ne s'intéresse pas à la récupération de l'argent.

Cependant, ces procédés présentent de nombreux inconvénients, notamment par la nature des bains chimiques et la complexité des procédés (nombreuses étapes).

La publication "Optimization of indium recovery from waste crystalline silicon heterojunction solar cells by acid leaching". (Solar Energy Materials and Solar Cells 2021, 230, 111218) décrit un procédé de traitement des cellules HJT ayant une couche d'indium-étain recouverte par des métallisations en argent. Dans un premier temps, la cellule HJT est immergée dans un bain basique d'hydroxyde de sodium pour séparer les métallisations de la surface de la cellule, puis la cellule est plongée dans un bain acide (chlorhydrique, sulfurique ou nitrique) pour dissoudre l'indium. Les conditions optimales ont été obtenues pour une concentration d'hydroxyde de sodium à 10% à 90°C et pour une concentration en H₂SO₄ de 6 mol.L⁻¹ à 93°C. Cependant, de telles conditions peuvent générer des effluents importants qui doivent par la suite être neutralisés, ce qui augmente le coût du procédé, et cela engendre également des risques importants pour l'homme et l'environnement.

On connaît également le document JP 2008 208396 A qui décrit un procédé de récupération de l'indium contenu dans un substrat. Ce procédé comprend une étape de dissolution au cours de laquelle on plonge le substrat dans une solution de dissolution comprenant de l'acide oxalique.

Actuellement, les procédés mis en œuvre pour la récupération de l'indium sont complexes, coûteux, consommateurs de réactifs et/ou dangereux et, par conséquent, induisent un coût économique et environnemental important.

Ainsi, aucun des procédés actuels ne permet la récupération de l'argent et de l'indium de manière satisfaisante.

### EXPOSÉ DE L'INVENTION

Un but de la présente invention est de proposer un procédé de récupération de l'indium présent dans un substrat contenant de l'oxyde d'indium-étain et une couche métallique en un métal du groupe du platine ou en argent, le substrat provenant par exemple provenant d'un module photovoltaïque à recycler, le procédé devant être simple à mettre en œuvre, peu coûteux et ne nécessitant pas l'utilisation de produit toxique pour l'environnement et/ou pour la santé des personnes mettant en œuvre le procédé.

Pour cela, la présente invention propose un procédé de récupération de l'indium contenu dans un substrat comprenant un film d'oxyde d'indium-étain recouvert localement par une couche métallique en un métal du groupe du platine ou en argent, le procédé comprenant une étape de dissolution au cours de laquelle on plonge le substrat dans une solution de dissolution comprenant de l'acide oxalique, moyennant quoi on dissout sélectivement la couche d'indium-étain et on forme un précipité d'oxalate d'indium, la dissolution de l'oxyde d'indium-étain conduisant à la libération de la couche métallique.

L'invention se distingue fondamentalement de l'art antérieur par l'utilisation d'une solution d'acide oxalique pour mettre en œuvre l'étape de dissolution. La dissolution sélective de la fine couche d'oxyde transparent en oxyde d'indium-étain (ITO), est suivie d'une précipitation de l'indium sous la forme d'un oxalate d'indium. Simultanément à la dissolution de l'indium, l'étain est dissout. En revanche, celui-ci ne précipite pas et reste en solution. Ainsi, à l'issue de cette étape, on obtient un liquide modérément acide enrichi en étain comprenant des solides : le précipité d'oxalate d'indium et la couche métallique sous forme solide.

Cette approche permet, dans une même étape, de dissoudre l'indium et de le faire précipiter sous forme d'oxalate et ainsi de le séparer facilement des autres éléments de la solution de dissolution.

Par ailleurs, cette dissolution est réalisée dans un solvant vert qui accepte de nombreux cycles de traitement, augmentant l'intérêt économique et environnemental. Cette approche permet de limiter les consommations en réactifs, évite l'utilisation de divers acides concentrés et réduit le nombre d'étapes.

Avantageusement, la concentration en acide oxalique est comprise entre 0,1 M et 2M.

Avantageusement, l'étape de dissolution est réalisée à une température comprise entre 20°C et 120°C, et de préférence entre 50°C et 80°C.

Avantageusement, le rapport solide/liquide est compris entre 1 et 40%, et de préférence entre 10% et 20%.

Avantageusement, la solution comprend, en outre, un acide additionnel a une concentration inférieure à 1M, et de préférence inférieure à 0,2 M. De préférence, l'acide additionnel est de l'acide sulfurique.

Avantageusement, le substrat comprend, en outre, un support, le film d'oxyde indium-étain étant disposé entre le support et la couche métallique, le support contenant du silicium ou du séléniure de cuivre, d'indium et de gallium (CIGS).

Avantageusement, le substrat est une cellule photovoltaïque ou un déchet de cellule photovoltaïque, par exemple une cellule à hétérojonction ou une cellule CIGS. La couche métallique, de préférence en argent, forme les collecteurs de courant. Le procédé permet de dissoudre sélectivement la couche d'ITO de la cellule photovoltaïque, par exemple une cellule en silicium à hétérojonction (HJT), ce qui désolidarise les collecteurs du corps de la cellule en silicium, sans dissolution d'éléments autres que la couche d'oxyde transparent conducteur en oxyde d'indium-étain.

Selon un mode de réalisation avantageux, le procédé comporte les étapes suivantes :
a) fournir un panneau photovoltaïque comprenant des câbles, une boîte de jonction, un cadre métallique, des cellules photovoltaïques encapsulées dans une couche de polymère et des connecteurs électriques,
b) éliminer les câbles, la boîte de jonction et le cadre métallique du panneau photovoltaïque,
c) réaliser un traitement thermique, chimique et/ou mécanique pour retirer la couche de polymère encapsulant les cellules photovoltaïques,
d) récupérer les cellules photovoltaïques, les cellules photovoltaïques formant un substrat contenant un film d'oxyde d'indium étain recouvert localement par une couche métallique, de préférence en argent,
e) mettre en œuvre l'étape de récupération de l'indium telle que définie précédemment.

Avantageusement, le procédé comprend, après l'étape e), les étapes ultérieures suivantes : récupération du précipité d'indium, traitement du thermique du précipité d'indium, par exemple à une température comprise entre 600°C et 700°C, moyennant quoi on forme un oxyde d'indium.

Le procédé présente de nombreux avantages :
- le procédé ne nécessite pas d'utiliser de solution acide fortement concentrée ni de liquide ionique,
- réduire considérablement les contraintes liées à l'utilisation d'acide concentré et à température, comme l'utilisation d'acide nitrique pour la dissolution de l'argent et/ou de l'indium,
- le procédé ne dégage pas de gaz nocifs et ne dégrade pas le milieu réactionnel,
- le procédé peut être réalisé sous condition atmosphérique (sous air),
- le procédé peut être réalisé à température ambiante (typiquement 25°C), ce qui évite l'apport d'énergie thermique,
- la couche métallique n'est pas dissoute et est ainsi facilement récupérable,
- permettre une dissolution sélective de la couche d'oxyde transparente, en évitant la dissolution du collecteur, ce qui réduit la consommation en réactifs et que l'on diminue le nombre d'étapes,
- utiliser un ion oxalate pour dissoudre et précipiter sélectivement l'indium par rapport à l'étain ; ainsi, on favorise le nombre de cycles de traitement et on réduit considérablement les effluents,
- ne pas mettre en œuvre d'étape d'électrodissolution ou d'électrodéposition (procédé dit electroless) pour dissoudre et récupérer l'indium.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
Les figures 1a et 1b sont des clichés photographiques pris à différents moments de la dissolution d'un sel ITO dans une solution d'acide oxalique à 1M et 70 °C, selon un mode de réalisation particulier de l'invention.
La figure 1c est un cliché photographique d'une poudre d'ITO (gauche) et d'un précipité d'oxalate d'indium (droite) obtenu après l'étape de dissolution représentée sur les figures 1a et 1b.
La figure 2 est un diffractogramme du précipité d'oxalate d'indium de la figure 1c (noir) et du produit In(C₂O₄)_{1.5}(H₂O)₃ (carte 01-73-2642 en gris).
Les figures 3a et 3b sont des photographies d'une plaque HJT avant traitement dans de l'acide oxalique 1M à 22 °C.
Les figures 3c et 3d sont des photographies d'une plaque HJT après traitement dans de l'acide oxalique 1M à 22 °C, selon un mode de réalisation particulier de l'invention.
La figure 4 est une photographie d'une plaque HJT après traitement dans de l'acide oxalique 1M à 100 °C durant 2h, selon un mode de réalisation particulier de l'invention.

### EXPOSÉ DÉTAILLÉ DE MODES DE RÉALISATION PARTICULIERS

Par la suite, même si la description fait référence à la valorisation de panneaux ou modules photovoltaïques ; l'invention est transposable à d'autres substrats contenant de l'oxyde d'indium-étain et une couche métallique en argent ou en un métal du groupe du platine (MGP). L'invention est par exemple transposable aux domaines en lien avec l'optique et/ou avec la conduction électronique comme les dispositifs électrochromiques, les cellules solaires flexibles organiques, les écrans (TV, téléphones, etc.), les capteurs de déformation, ou encore le blindage électromagnétique.

Le procédé de recyclage d'un panneau photovoltaïque permettant de récupérer l'indium comprend les étapes suivantes :
a) fournir un panneau photovoltaïque,
b) éliminer les câbles, la boîte de jonction et le cadre métallique du panneau photovoltaïque,
c) réaliser un traitement thermique, chimique et/ou mécanique pour retirer la couche de polymère encapsulant les cellules photovoltaïques et les connecteurs électriques,
d) récupérer les cellules photovoltaïques, les cellules photovoltaïques formant un substrat contenant un film d'oxyde d'indium-étain recouvert localement par une couche métallique, et plus particulièrement par une couche en argent,
e) mettre en œuvre une étape de récupération de l'indium.

Le panneau photovoltaïque à recycler comprend des câbles, une boîte de jonction et un cadre métallique, une couche de polymère (typiquement en éthyle vinyle acétate (EVA)), des connecteurs électriques et des cellules photovoltaïques.

Le procédé est plus particulièrement décrit pour un panneau photovoltaïque mais plusieurs panneaux photovoltaïques pourraient être traités simultanément.

La cellule photovoltaïque comprend un substrat avec divers éléments valorisables. En particulier, le substrat peut comprendre successivement un support, un film d'oxyde transparent conducteur (OTC ou TCO pour « transparent conductive oxide »), et une couche de métallisation recouvrant partiellement le TCO. Le film de TCO est ainsi accessible à la gravure.

Par la suite, nous décrirons plus particulièrement un substrat comprenant un support, un film d'oxyde transparent conducteur et une couche métallique (aussi appelée couche de métallisation). Cependant, le procédé peut également être mis en œuvre pour un substrat formé d'un film transparent conducteur et d'une couche métallique.

Les cellules photovoltaïques peuvent être en silicium cristallin, en silicium poly-cristallin, en CIGS ou encore en pérovskite.

On choisira, de préférence, une cellule à Hétérojonction (HJT).

A titre illustratif et non limitatif, la cellule HJT peut comprendre un substrat en silicium monocristallin recouvert, de part et d'autre, par des couches de silicium amorphe (P et N+). Les couches de silicium amorphes peuvent avoir une épaisseur d'une dizaine de nanomètres. Ces couches sont elles-mêmes recouvertes du film d'oxyde transparent conducteur puis par une grille conductrice.

Dans le cadre de l'invention, le film de TCO est un film d'oxyde indium-étain (ou ITO pour « Indium Tin Oxide »). L'ITO comprend par exemple 97% d'oxyde d'indium (In₂O₃) et 3% d'oxyde d'étain SnO₂.

La couche de métallisation forme une grille conductrice.

La couche de métallisation peut représenter de 0,01 % à 1 % en masse de la cellule.

La couche de métallisation est une couche métallique en un métal du groupe du platine ou en argent.

Le métal du groupe du platine est choisi parmi le ruthénium, le rhodium, le palladium, l'osmium, l'iridium et le platine. De préférence, il s'agit de platine.

Par exemple, pour une cellule HJT, une couche de métallisation en indium peut représenter 0,27% massique de la cellule.

De préférence, la couche métallique est en argent.

La couche métallique peut être en argent pur (i.e. la couche contient au moins 99% d'argent). Elle est, par exemple, réalisée avec une pâte de métallisation en argent.

Alternativement, elle peut contenir un ou plusieurs autres éléments, par exemple, choisis parmi le plomb, l'étain et le cuivre. Les connecteurs sont, par exemple, formés d'un cœur en cuivre enrobé de Sn62Pb36Ag2.

Les étapes b) et c) permettent de séparer et désolidariser les cellules photovoltaïques ainsi que les connecteurs électriques contenant de l'argent des autres éléments du panneau photovoltaïque. Une fois les cellules photovoltaïques désolidarisées, elles sont avantageusement déconnectées les unes des autres et, éventuellement, des connecteurs électriques ne contenant pas d'argent.

A l'issue des étapes b) et c), les éléments d'intérêt du panneau photovoltaïque ont été séparés.

On récupère ainsi les cellules photovoltaïques (étape d).

Chaque cellule photovoltaïque représente un substrat contenant de l'indium et de l'argent à valoriser lors de l'étape e).

Lors de l'étape e), on réalisée une étape de dissolution au cours de laquelle on plonge le substrat dans une solution de dissolution. La solution de dissolution comprend de l'acide oxalique. Cette étape conduit à la dissolution sélective de l'indium et à la formation d'un précipité d'oxalate d'indium. La couche métallique est ainsi libérée du reste du substrat.

Cette étape évite l'émission de gaz (inflammabilité, volatilité) et/ou la dégradation de la solution.

La solution de dissolution est un milieu aqueux comprenant des ions oxalate. Elle est obtenue en mélangeant de l'acide oxalique et de l'eau. Les ions oxalates sont nécessaires pour promouvoir la dissolution et permettre la précipitation.

L'argent n'est pas ou très peu dissous dans la solution acide. On considère que la dissolution de l'argent est négligeable lors de cette étape. Il en va de même pour un métal du groupe du platine.

La solution de dissolution est une solution d'acide oxalique à faible concentration. Par faible, on entend que la concentration en acide oxalique est comprise entre 0,1 et 2 mol/L et de préférence entre 0,1 et 1 mol/L.

Selon un mode de réalisation particulier, on peut également faire un mélange d'ions oxalates avec un autre acide minéral ou organique. De préférence, il s'agit d'acides minéraux, notamment l'acide sulfurique et l'acide chlorhydrique. On utilisera préférentiellement un acide qui évite la dissolution d'argent et plus spécifiquement l'acide sulfurique qui est peu couteux.

Cet acide additionnel a, de préférence, une concentration inférieure à 1M, et de préférence inférieure à 0,2 M.

Le rapport solide/liquide est compris entre 1% et 40%, et de préférence, le rapport solide/liquide est compris entre 1% et 30%. Ce ratio est noté S/L. Préférentiellement, le ratio S/L est de l'ordre de 15%. La phase solide correspond au substrat plonger dans la solution de dissolution. La phase liquide correspond à la solution acide. Ce ratio correspond à la masse de solide, en grammes, divisée par le volume de la solution, en millilitres. Ainsi, un ratio S/L compris entre 1% et 40% correspond à une concentration massique de l'oxyde métallique dans la solution acide compris entre 0,01 g/mL et 0,4g/mL. Pour des valeurs S/L inférieures à 1%, le rendement de dissolution est également élevé. Cependant, la quantité d'acide utilisée est considérablement élevée par rapport à la quantité de métal à dissoudre, et la quantité de réactifs perdus est conséquente.

La température de la solution acide est, avantageusement, comprise entre 15°C et 100°C. De préférence, la température est entre 20°C et 70 °C, par exemple autour de 50°C pour minimiser la toxicité et réduire la consommation énergétique du procédé. Il n'y a, avantageusement, pas besoin d'apport d'énergie thermique pour réaliser la dissolution du TCO. Toutefois, une augmentation de la température peut être, avantageusement, réalisée pour améliorer la vitesse de dissolution sans dégradation du milieu. Pour améliorer les cinétiques, on choisira de préférence une température entre 50°C et 100°C et encore plus préférentiellement entre 70°C et 100°C.

La pression est de préférence la pression ambiante (typiquement 1 bar).

Un asservissement peut être réalisé pour maintenir le pH entre 1 et 4.

Optionnellement, la solution peut comprendre un agent desséchant, et/ou un agent favorisant le transport de matière (viscosité, conductivité ionique).

L'étape de dissolution peut être réalisée sous agitation.

A l'issue du procédé, le précipité d'indium peut être récupéré. Avantageusement, le précipité est soumis à un traitement thermique à une température comprise entre 600° C et 700°C afin de former de l'oxyde d'indium.

La couche d'argent, sous forme, solide peut également être facilement extraite de la solution de dissolution.

L'étain dissout en solution peut être récupéré, par exemple par une étape d'électrodéposition.

L'homme du métier pourra choisir différentes techniques de séparation, récupération en fonction des éléments. Par exemple, il pourra choisir de mettre en œuvre : une étape de flottation ionique, de tamisage, ou encore de séparation électrostatique.

La solution de dissolution est ensuite utilisable pour un nouveau cycle de traitement.

### Exemples illustratifs et non limitatifs de modes de réalisation :

### Essai 1 : Dissolution d'ITO en milieu acide oxalique :

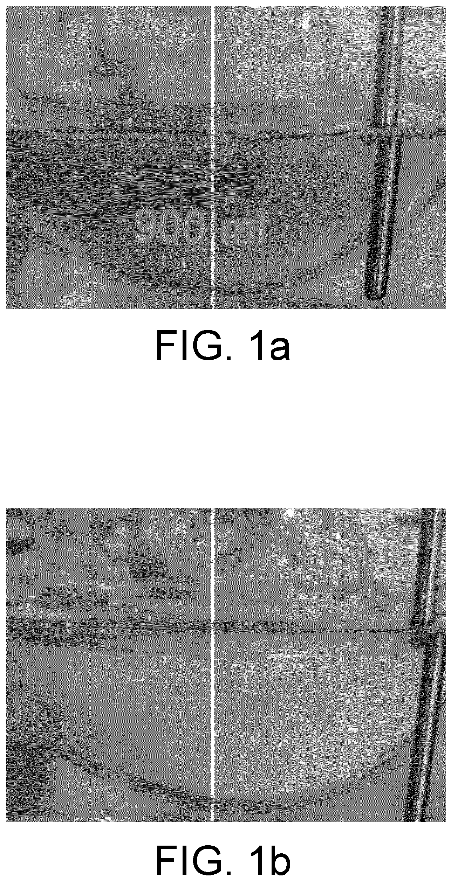

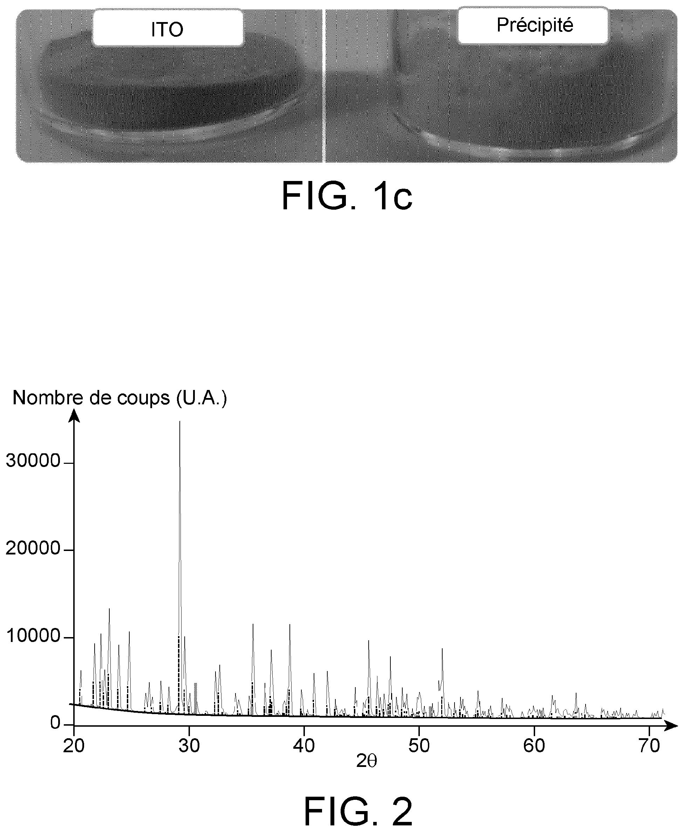

Une poudre d'ITO est lixiviée à 70 °C dans un bain d'acide oxalique avec une concentration de 1M. La durée de traitement est de 5 heures avec un rapport solide liquide de 1/1000 correspondant à une concentration en indium en solution de 0,745 g/L (figures 1a et 1b). Cet essai simule le traitement de cellules HJT avec un rapport de 15%. On observe un changement de couleur : la poudre ITO est jaune et le précipité est blanc (figure 1c). L'analyse DRX indique que le produit blanc provenant de la lixiviation est un précipité d'oxalate d'indium hydraté (figure 2).

Une analyse ICP-OES a été réalisée. Le tableau suivant répertorie les résultats de l'analyse obtenus sur la poudre d'ITO avant lixiviation et sur le précipité blanc formé après lixiviation.

| | **Indium** | **Etain** | **In/Sn** |
|---|---|---|---|
| **Poudre ITO (%m)** | 74,5 | 4,2 | 18 |
| **Précipité (%m)** | 36,0 | 0,16 | 225 |

On observe que la poudre est purifiée de 225 fois en étain, confirmant la sélectivité du processus de dissolution/précipitation de l'indium par un bain acide composé d'oxalates.

### Essai 2 : Traitement d'une cellule HJT en milieu acide oxalique 1M à 22°C:

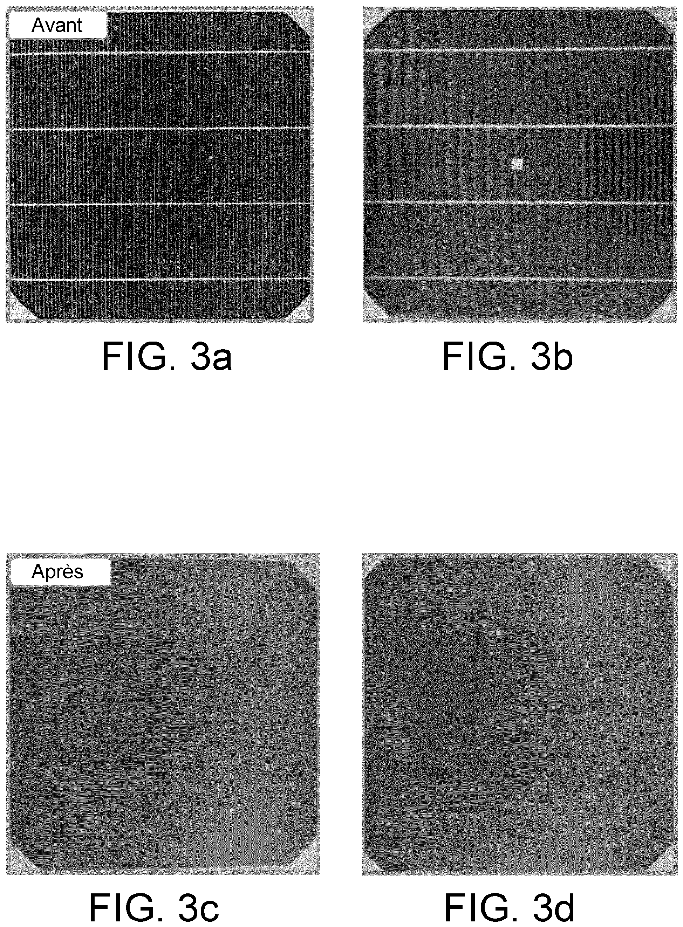

Dans cet essai, on utilise des cellules HJT comprenant de l'ITO disposé entre le silicium et les connecteurs en argent. La solution de dissolution est une solution d'acide oxalique 1M à 22 °C (200 mL). Les cellules sont plongées dans cette solution durant 48 heures. La solution est agitée (400 tours/min). Comme observé sur les figures 3a et 3b, avant traitement la cellule est intacte, avec la présence de métallisation (« fingers ») d'argent (blanc), puis après traitement la plaque est totalement dépourvue du métal (figures 3c et 3d). Celui-ci est solide en solution. Le décollement des collecteurs en argent est associé à la dissolution de la couche d'ITO. Il y a une séparation physique de l'argent et du silicium.

### Essai 3 : Traitement d'une cellule HJT en milieu acide oxalique 1M à 100°C :

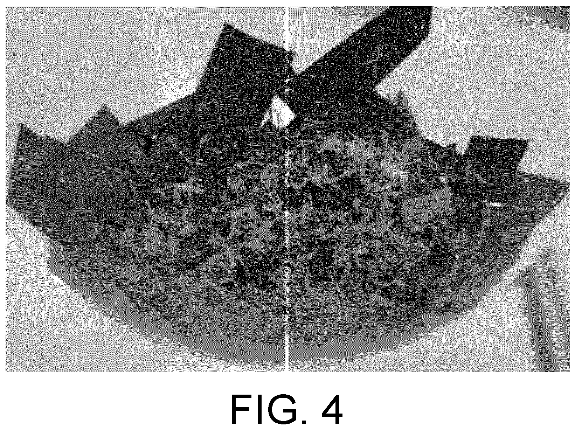

Le traitement d'une cellule HJT est réalisé en milieu acide oxalique 1M à 100 °C durant 2 heures, avec un volume de 200 mL. La cellule HJT est plongée dans le bain sous une agitation de 400 rpm. Comme observé sur la figure 4, après traitement les métallisations (« fingers ») d'argents sont décrochés du silicium et intacts. Après traitement le silicium est totalement dépourvu du métal. Le décollement des collecteurs en argent est associé à la dissolution de la couche d'ITO. Il y a une séparation physique de l'argent et du silicium.

## Revendications

1. Procédé de récupération de l'indium contenu dans un substrat comprenant un film d'oxyde d'indium-étain recouvert localement par une couche métallique, en argent ou en un métal du groupe du platine, le procédé comprenant une étape de dissolution au cours de laquelle on plonge le substrat, recouvert localement par la couche métallique, dans une solution de dissolution comprenant de l'acide oxalique, moyennant quoi on dissout sélectivement la couche d'indium-étain et on forme un précipité d'oxalate d'indium, la dissolution de l'oxyde d'indium-étain conduisant à la libération de la couche métallique.

2. Procédé selon la revendication 2, **caractérisé en ce que** la concentration en acide oxalique est comprise entre 0,1 et 2 mol/L.

3. Procédé selon l'une des revendications 1 et 2, **caractérisé en ce que** l'étape de dissolution est réalisée à une température comprise entre 20°C et 120°C, et de préférence entre 50°C et 80°C.

4. Procédé selon l'une quelconque des revendications précédentes, **caractérisé en ce que** le rapport solide/liquide est compris entre 1 et 40%, et de préférence entre 10% et 20%.

5. Procédé selon l'une quelconque des revendications précédentes, **caractérisé en ce que** la solution comprend, en outre, un acide additionnel a une concentration inférieure à 1M, et de préférence inférieure à 0,2 M.

6. Procédé selon la revendication 5, **caractérisé en ce que** l'acide additionnel est de l'acide sulfurique.

7. Procédé selon l'une quelconque des revendications précédentes, **caractérisé en ce que** le substrat comprend en outre un support, le film d'oxyde indium-étain étant disposé entre le support et la couche métallique, le support contenant du silicium ou du séléniure de cuivre, d'indium et de gallium (CIGS).

8. Procédé selon l'une quelconque des revendications précédentes, **caractérisé en ce que** le substrat est une cellule photovoltaïque ou un déchet de cellule photovoltaïque, par exemple une cellule à hétérojonction ou une cellule CIGS.

9. Procédé selon l'une quelconque des revendications précédentes, **caractérisé en ce qu'**il comporte les étapes suivantes :
a) fournir un panneau photovoltaïque comprenant des câbles, une boîte de jonction, un cadre métallique, des cellules photovoltaïques encapsulées dans une couche de polymère et des connecteurs électriques,
b) éliminer les câbles, la boîte de jonction et le cadre métallique du panneau photovoltaïque,
c) réaliser un traitement thermique, chimique et/ou mécanique pour retirer la couche de polymère encapsulant les cellules photovoltaïques,
d) récupérer les cellules photovoltaïques, les cellules photovoltaïques formant un substrat contenant un film d'oxyde d'indium étain recouvert localement par une couche métallique, de préférence en argent,
e) mettre en œuvre l'étape de récupération de l'indium telle que définie dans l'une des revendications 1 à 8.

10. Procédé selon la revendication précédente, **caractérisé en ce que** le procédé comprend, après l'étape e), les étapes ultérieures suivantes : récupération du précipité d'indium, traitement du thermique du précipité d'indium, par exemple à une température comprise entre 600°C et 700°C, moyennant quoi on forme un oxyde d'indium.

## Patentansprüche

1. Verfahren zur Rückgewinnung von Indium, das in einem Substrat enthalten ist, das einen Indium-Zinn-Oxid-Film umfasst, der lokal mit einer Metallschicht aus Silber oder einem Metall der Platingruppe bedeckt ist, wobei das Verfahren einen Auflösungsschritt umfasst, bei dem das Substrat, das lokal mit der Metallschicht bedeckt ist, in eine Auflösungslösung, die Oxalsäure umfasst, eingetaucht wird, wodurch die Indium-Zinn-Schicht selektiv aufgelöst und ein Indiumoxalat-Präzipitat gebildet wird, wobei die Auflösung des Indium-Zinn-Oxids zur Freisetzung der Metallschicht führt.

2. Verfahren nach Anspruch 2, **dadurch gekennzeichnet, dass** die Oxalsäurekonzentration zwischen 0,1 und 2 mol/l liegt.

3. Verfahren nach einem der Ansprüche 1 und 2, **dadurch gekennzeichnet, dass** der Auflösungsschritt bei einer Temperatur zwischen 20 °C und 120 °C und vorzugsweise zwischen 50 °C und 80 °C durchgeführt wird.

4. Verfahren nach einem der vorhergehenden Ansprüche, **dadurch gekennzeichnet, dass** das Feststoff/Flüssigkeits-Verhältnis zwischen 1 und 40 % und vorzugsweise zwischen 10 % und 20 % liegt.

5. Verfahren nach einem der vorhergehenden Ansprüche, **dadurch gekennzeichnet, dass** die Lösung ferner eine zusätzliche Säure mit einer Konzentration von weniger als 1 M und vorzugsweise weniger als 0,2 M umfasst.

6. Verfahren nach Anspruch 5, **dadurch gekennzeichnet, dass** die zusätzliche Säure Schwefelsäure ist.

7. Verfahren nach einem der vorhergehenden Ansprüche, **dadurch gekennzeichnet, dass** das Substrat ferner einen Träger umfasst, wobei der Indium-Zinn-Oxid-Film zwischen dem Träger und der Metallschicht angeordnet ist, wobei der Träger Silizium oder Kupfer-Indium-Gallium-Selenid (CIGS) enthält.

8. Verfahren nach einem der vorhergehenden Ansprüche, **dadurch gekennzeichnet, dass** das Substrat eine Photovoltaikzelle oder ein Photovoltaikzellenabfall ist, beispielsweise eine Heterojunction-Zelle oder eine CIGS-Zelle.

9. Verfahren nach einem der vorhergehenden Ansprüche, **dadurch gekennzeichnet, dass** es die folgenden Schritte umfasst:
a) Bereitstellen eines Photovoltaikmoduls, das Kabel, eine Anschlussdose, einen Metallrahmen, in einer Polymerschicht eingekapselte Photovoltaikzellen und elektrische Steckverbinder umfasst,
b) Entfernen der Kabel, der Anschlussdose und des Metallrahmens vom Photovoltaikmodul,
c) Durchführen einer thermischen, chemischen und/oder mechanischen Behandlung, um die die Photovoltaikzellen einkapselnde Polymerschicht zu entfernen,
d) Zurückgewinnen der Photovoltaikzellen, wobei die Photovoltaikzellen ein Substrat bilden, das einen Indium-Zinn-Oxid-Film enthält, der lokal mit einer Metallschicht, vorzugsweise aus Silber, bedeckt ist,
e) Ausführen des Schritts des Rückgewinnens von Indium gemäß einem der Ansprüche 1 bis 8.

10. Verfahren nach dem vorhergehenden Anspruch, **dadurch gekennzeichnet, dass** das Verfahren nach Schritt e) die folgenden nachfolgenden Schritte umfasst: Rückgewinnen des Indiumpräzipitats, thermische Behandlung des Indiumpräzipitats, beispielsweise bei einer Temperatur zwischen 600 °C und 700 °C, wodurch ein Indiumoxid gebildet wird.

## Claims

1. A method for recovering indium contained in a substrate comprising an indium tin oxide film locally covered with a metal layer, of silver or a metal of the platinum group, the method comprising a dissolution step in which the substrate, locally covered with the metal layer, is dipped into a dissolution solution comprising oxalic acid, whereby the indium tin layer is selectively dissolved and an indium oxalate precipitate is formed, the dissolution of the indium tin oxide resulting in releasing the metal layer.

2. The method according to claim 2, **characterised in that** the concentration of oxalic acid is between 0.1 and 2 mol/L.

3. The method according to any one of claims 1 and 2, **characterised in that** the dissolution step is performed at a temperature of between 20°C and 120°C and preferably between 50°C and 80°C.

4. The method according to any one of the preceding claims, **characterised in that** the solid/liquid ratio is between 1 and 40%, and preferably between 10% and 20%.

5. The method according to any one of the preceding claims, **characterised in that** the solution further comprises an additional acid having a concentration of less than 1M, and preferably less than 0.2 M.

6. The method according to claim 5, **characterised in that** the additional acid is sulphuric acid.

7. The method according to any one of the preceding claims, **characterised in that** the substrate further comprises a support, the indium tin oxide film being disposed between the support and the metal layer, the support containing silicon or copper indium gallium selenide (CIGS).

8. The method according to any one of the preceding claims, **characterised in that** the substrate is a photovoltaic cell or photovoltaic cell waste, for example a heterojunction cell or a CIGS cell.

9. The method according to any one of the preceding claims, **characterised in that** it comprises the following steps of:
a) providing a photovoltaic panel comprising cables, a junction box, a metal frame, photovoltaic cells encapsulated in a polymer layer and electrical connectors,
b) removing the cables, junction box and metal frame from the photovoltaic panel,
c) performing a thermal, chemical and/or mechanical treatment to withdraw the polymer layer encapsulating the photovoltaic cells,
d) recovering the photovoltaic cells, the photovoltaic cells forming a substrate containing an indium tin oxide film locally covered with a metal layer, preferably of silver,
e) implementing the step of recovering indium as defined in one of claims 1 to 8.

10. The method according to the preceding claim, **characterised in that** the method comprises, after step e), the following subsequent steps of: recovering the indium precipitate, heat treating the indium precipitate, for example at a temperature between 600°C and 700°C, whereby an indium oxide is formed.
